# EUROPEAN PATENT APPLICATION

(11) **EP 4 487 929 A1**
(43) Date of publication of application: **08.01.2025**
(21) Application number: 24180510.0
(22) Date of filing: 06.06.2024
(51) Int. Cl.: A63F 13/497, A63F 13/5375, A63F 13/67, H04N 21/25

(54) **APPARATUS AND METHOD**

(30) Priority: 06.07.2023 GB 202310357
(71) Applicant: Sony Interactive Entertainment Inc., Tokyo 108-0075 (JP)
(72) Inventor: SMITH, Alexei, London, W1F 7LP (GB); VEMULA, Thriveni, London, W1F 7LP (GB)
(74) Representative: D Young & Co LLP

(57) **Abstract**

A method comprises performing, using processing circuitry, a data processing task in response to operation of one or more user controls; generating video material for display to provide guidance to a user in the operation of the user controls to control performance of the data processing task; replaying the video material in response to operation of the one or more user controls; detecting one or more replay confirmation points with respect to the video material; and pausing replay of the video material at a given confirmation point and requesting user confirmation to continue replay of the video material beyond the given confirmation point.

## Description

This disclosure relates to apparatus and methods.

Data processing apparatus such as computer games machines can be controlled by user-operable control devices configured to provide user input to control or at least influence the execution of data processing operations such as computer game play and/or the execution of a computer game program.

Computer games programs can be difficult for the user to execute. Indeed, this is an aim of many such systems, so that the user or purchaser of such a program is provided with a series of challenges so as to stretch the user's abilities, understanding and/or appreciation of how to resolve such challenges. Often a computer games program may aim to steer the user to follow a sequence or storyboard such that only when the user has completed a given challenge can the user progress to the next challenge, and so on.

While this type of arrangement can provide an engaging period of game play for many users, if a situation arises where a user is unable to complete a challenge, the user can become stuck at that stage in the computer games program. This is undesirable not only from the point of view of the user but also of the game designer, because it would soon become boring and unrewarding for the user to remain stuck at a particular stage in the game.

To address this situation, some computer games provide optional help or tips to assist the user in understanding how best to approach a given challenge.

While this introduction has referred to computer game software, the present disclosure is more widely applicable and can be relevant to other types of software involving challenges presented to a user, such as software to operate industrial robots or unmanned vehicles, software to control test procedures such as chemical assays, computer aided design software and the like.

It is in this context that the present disclosure arises.

The present disclosure provides a method comprising:
performing, using processing circuitry, a data processing task in response to operation of one or more user controls;
generating video material for display to provide guidance to a user in the operation of the user controls to control performance of the data processing task;
replaying the video material in response to operation of the one or more user controls;
detecting one or more replay confirmation points with respect to the video material; and
pausing replay of the video material at a given confirmation point and requesting user confirmation to continue replay of the video material beyond the given confirmation point.

The present disclosure also provides computer software which, when executed by one or more computers, causes the one or more computers to perform such a method.

The present disclosure also provides a non-tangible machine-readable storage medium which stores such computer software.

The present disclosure also provides circuitry comprising:
one or more user controls; and
processing circuitry to perform a data processing task in response to operation of one or more user controls;
the processing circuitry being configured to:
   generate video material for display to provide guidance to a user in the operation of the user controls to control performance of the data processing task;
   replay the video material in response to operation of the one or more user controls;
   detect one or more replay confirmation points with respect to the video material; and
   pause replay of the video material at a given confirmation point and request user confirmation to continue replay of the video material beyond the given confirmation point.

Various further aspects and features of the present disclosure are defined in the appended claims and within the text of the accompanying description.

Embodiments of the disclosure will now be described, by way of example only, with reference to the accompanying drawings, in which:
Figure 1a schematically illustrates an entertainment system;
Figure 1b schematically illustrates an entertainment system in communication with one or more servers;
Figure 1c schematically illustrates an entertainment system in communication with one or more other entertainment systems;
Figures 2 to 4 are schematic flowcharts illustrating respective aspects of execution of computer game software;
Figure 5 schematically illustrates a help video;
Figures 6 and 7 are schematic flowcharts illustrating respective methods;
Figure 8 schematically illustrates the detection of user quit points;
Figures 9 and 10 are schematic flowcharts illustrating respective methods;
Figure 11 schematically illustrates the detection of user quit points; and
Figure 12 is a schematic flowchart illustrating a method.

### Description of Embodiments

### Overview of apparatus

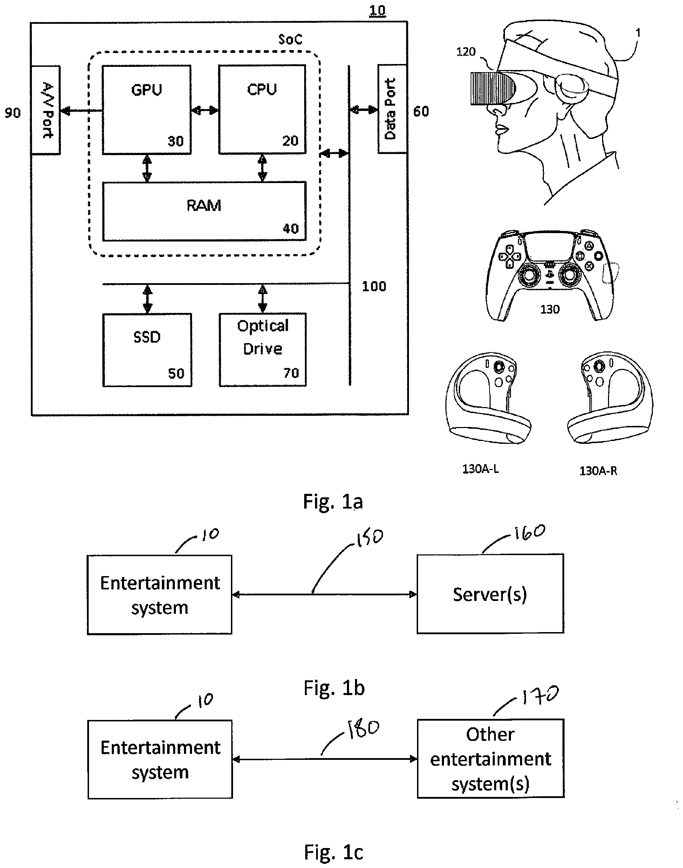

Referring to Figure 1a, an example of an entertainment system 10 is a computer or console such as the Sony^{®} PlayStation 5^{®} (PS5) system.

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5. The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment system is a head mounted display `HMD' 120, such as the PlayStation VR 2 'PSVR2', worn by a user 1.

Where components are not integrated, they may be connected as appropriate either by a dedicated data link or via a bus 100.

Interaction with the system is typically provided using one or more handheld controllers (130, 130A), such as the DualSense^{®} controller (130) in the case of the PS5, and/or one or more VR controllers (130A-L, R) in the case of the HMD.

Figure 1b schematically illustrates an entertainment system 10 of the form described with respect to Figure 1a in data communication (for example via an Internet connection 150) with one or more servers 160. The server(s) 160 can be in data communication with multiple entertainment systems 10, though only one such entertainment system is illustrated in Figure 1b for clarity of the diagram. In this way, the server(s) 160 can aggregate information from multiple entertainment systems 10, with example usage of such information being discussed below.

Figure 1c schematically illustrate an entertainment system 10 of the type described with respect to Figure 1a in data communication with one or more other entertainment systems 170, for example via an Internet connection 180. Such a "peer-to-peer" interconnection arrangement can allow the sharing of information (examples being discussed below) between entertainment systems.

### Computer gameplay - example

As mentioned above, often a computer games program may aim to steer the user to follow a sequence or storyboard such that only when the user has completed a given challenge can the user progress to the next challenge, and so on. In some examples, the computer games program may be arranged as a succession of "levels", each level containing or involving one or more challenges or objectives (referred to in parts of this description as data processing tasks to be performed by processing circuitry in response to user operation of controls) which have to be met by the user, firstly in order to move on to a next such objective within that level and secondly to allow progression, once all of the objectives of a level have been met, to a next level and so on through to completion of the entire computer games program by the user. Examples of such objectives may include matters such as any one or more of (i) destroying or at least disabling a game adversary such as a non-playable character (NPC), (ii) constructing, navigating through or at least partially destroying a given item of game environment infrastructure (for example crossing a bridge within the game environment infrastructure), (iii) finding a given item within the computer game environment, or the like.

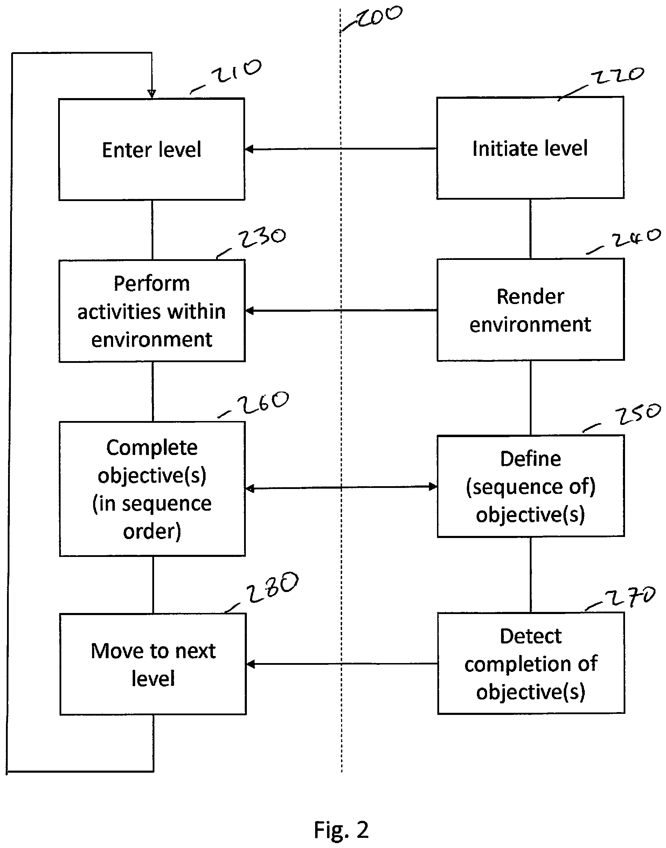

Figure 2 provides a schematic flowchart relating to a computer game arrangement having multiple levels as discussed above. The flowchart indicates steps performed by a user or player of the computer game software (drawn to the left of a schematic divider 200) and technical steps performed by the apparatus or circuitry such as the entertainment system of Figure 1a, shown to the right of the schematic divider 200.

At a step 210 the gameplay by the user enters a given level of the computer game software, and at this stage the entertainment system initiates handling of that level at a step 220, for example by loading into memory various assets such as textures, videos, characters or the like required to represent that level to the user of the computer game software.

At the step 230 the user performs activities within the computer game environment provided by the current level, with the apparatus rendering that environment at a step 240. At a step 250 the apparatus under control of the computer game software defines one or more objectives, challenges or tasks to be performed by the user in order to achieve completion of the prevailing level. These objectives may be defined as a succession or sequence of objectives such that completion of a given objective is required, either before gameplay can proceed to the next objective in the sequence or before completion of the next objective in the sequence is counted towards completion of the level. In other words, if the sequence of objectives comprises objectives A, B and then C, in some examples the user may be constrained so that objective B cannot even be attempted until objective A has been completed, while in other examples, if the user completes objective B before having completed objective A, this will not be counted towards progression through the sequence and objective B will remain to be completed after objective A has been performed. In other examples, of course, a set of two or more objectives could be provided with no constraints upon the order of completion of the objectives. Accordingly, at step 260 the user completes the objectives associated with the current level, if required in the order defined by the sequence.

At the step 270 the apparatus under the control of the computer game software detects completion of the set or sequence of objectives and allows and/or controls the progression at step 280 to a next level. Of course, if the current level represented a final level of the computer game software then the step 280 would refer to completion of the entire computer game.

### Help / Tips Information

It is possible that the user engaged in a computer game of the type described above may struggle to complete a given objective. In the short-term this can be subjectively frustrating for the user but a more serious commercial impact may be that the user simply loses interest in the game and/or that the game develops a reputation for being too difficult for the average user. Therefore, it is known for computer games to provide "help" or "tips" information (the terms being used generally interchangeably here) to a user struggling with a given objective.

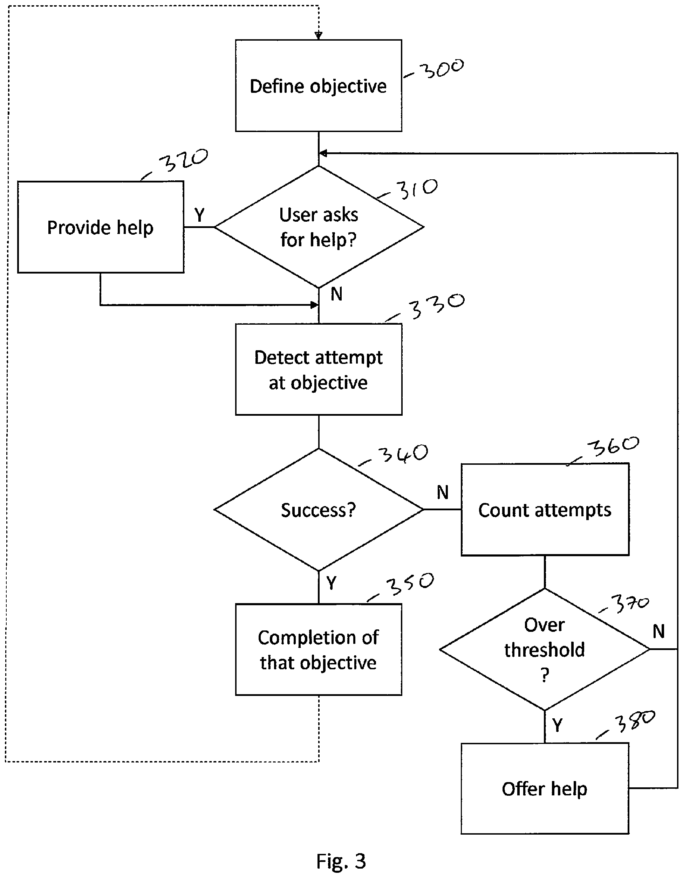

The nature of the help or tips information used in the present examples will be discussed in detail further below. However, first, Figure 3 provides a schematic flowchart illustrating various options for initiating the provision of such helpful tips information to a user.

Referring to Figure 3, at a step 300, the computer game software defines a given objective. This step corresponds generally to at least a part of the step 250 of Figure 2.

One option for the provision of help or tips information is that the user asks for such information and this may be detected at a step 310. If the user does ask for help, then help information can be provided at step 320 before control returns to step 330 at which an attempt at given objective is detected.

At the step 340, if the attempt is successful then completion of the objective is noted at the step 350. Depending on the nature of the computer game software and/or the structure of a current level, control may then return to the step 300 in connection with a next objective.

If, however, success is not detected at the step 340, then the computer game software can increment a count of the number of attempts at that objective, at a step 360. At a step 370 the count may be compared with a threshold value (for example, three attempts) and if the count is no higher than the threshold value control can simply return to the step 310. On the other hand, if the count exceeds the threshold then control passes to step 380.

As drawn, the step 380 refers to offering help to the user. For example, an indication such as a visual indication can be provided to the user to say "press the ▲ button for help". This arrangement allows the user to decide whether or not to accept the help which has been offered (and which might, depending upon the computer game design, have an associated financial cost, game cost or penalty associated with its acceptance) or simply to continue attempting the objective. Alternatively, the step 380 could be implemented as the proactive provision of help whether or not the user accepts an offer of such help. Alternatively, a second threshold could be used (not shown in Figure 3) such that exceeding the first threshold count of attempts triggers an offer of help or tips information, whereas exceeding the second, higher, threshold count of attempts triggers the proactive provision of such help whether or not the user requests it. As before, control passes back to the step 310.

### Video help / tips - example

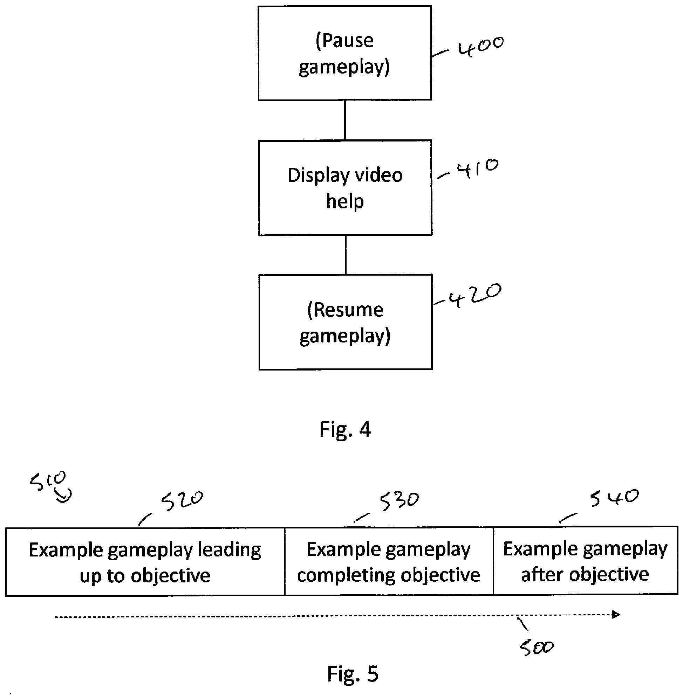

In some examples, help or tips information may be provided to the user in the form of a video clip, and an example of such a technique will be described with reference to Figures 4 and 5.

Figure 4 is a schematic flowchart relating to the provision of a help video by the apparatus operating under the control of the computer game software. In this example, at a step 400, in response to a determination to provide a help video (for example at the step 320 or at a variant of the step 380 as discussed above) the gameplay by the user is paused or at least the execution of certain operations may be inhibited or disabled for the period in which the video help is to be displayed. The video help is displayed at step 410 and, once the user has finished with the video help gameplay is resumed at a step 420.

Figure 5 schematically represents one example of such a help video, in which time within the video material is shown progressing from left to right by a schematic arrow 500. The video content 510 may comprise video content 520 representing example or typical gameplay leading up to the user encountering the objective, video content 530 representing an example or expected form of gameplay actually completing the objective and video content 540 representing typical or example gameplay following completion of the objective.

It is noted that the video content 520, 540 simply represents typical gameplay, given that in actual gameplay the user may behave differently before or after encountering the objective. The video content 530 represents an expected form of gameplay required to complete the objective but from the user's point of view, this is again an example given that the user could make at least minor variations with respect to the expected gameplay and still manage to complete the objective.

### Quit points and their detection

Although help videos can be very useful, it might be the case that users do not enjoy watching a video representation of gameplay ahead of the user's current gameplay position. This can be viewed as a so-called spoiler, giving away potentially surprising or unexpected gameplay features which the user has yet to encounter. For this reason, it has been noted within the present disclosure that some users stop or "quit" a help video before it is finished, in an effort to avoid being presented with spoilers.

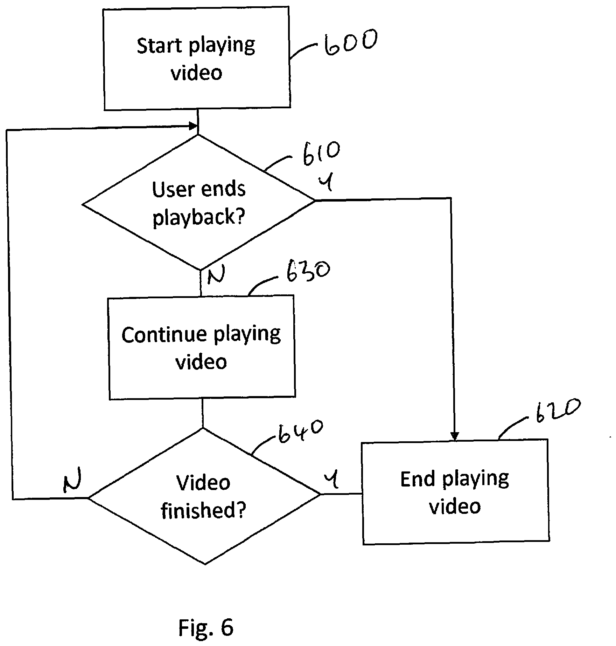

In an example process shown schematically by a flowchart of Figure 6, the entertainment device starts playing a help video at a step 600. At a step 610 a detection is made as to whether the user has ended playback early, that is to say stopped or quit the playback. If the answer is yes, then control passes to a step 620 at which video playback is ended. Otherwise, if the answer is no then control passes to a step 630 at which the video continues playing. A test is performed at a step 640 as to whether the video material has finished. If the answer is yes, then control goes to the step 620 and otherwise if the answer is no control returns to the step 610.

The point within the video at which the user ended playback (the positive output of the step 610) is referred to here is a quit point.

Typically, a quit point may represent a position within the video material at which the user has acquired enough guidance to at least increase the user's chances of successfully completing the current objective. But the decision to end playback early rather than continue to the end could either be based upon the user reaching a level of discomfort that the user is about to see a spoiler, or that there is no point watching any further because all useful information has been acquired, or both.

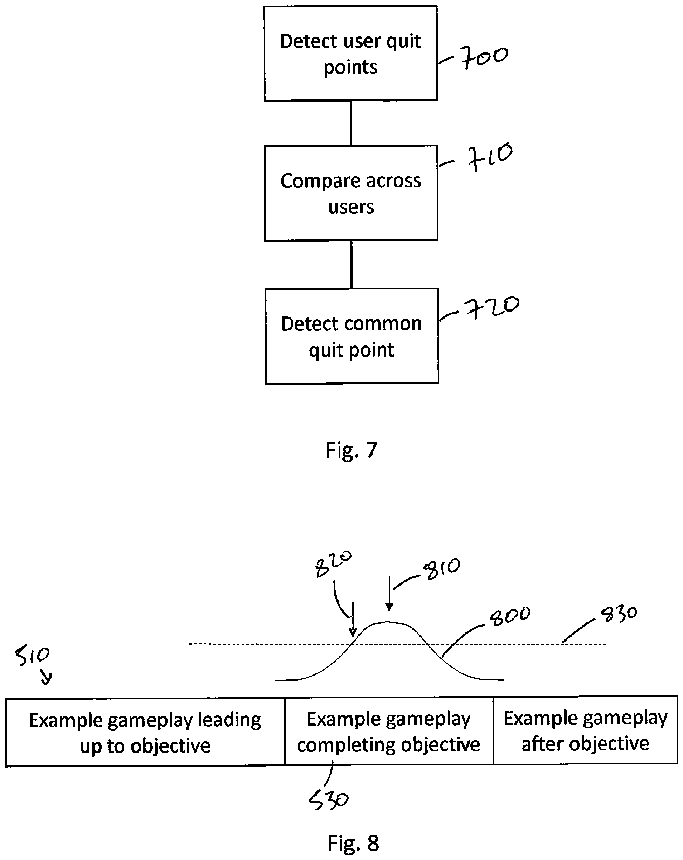

Figure 7 is a schematic flowchart illustrating an analysis which can be applied to quit points.

At the step 700 the entertainment system 10 detects a user quit point for a given help video and similarly other instances 170 of entertainment systems detect user quit points for the same help video.

At a step 710, the quit points are compared across users and/or entertainment systems. This can be performed for example by the server 160 of Figure 1b or on a collective basis by the peer to peer network of entertainment systems 170, 10 of Figure 1c.

At a step 720, a common quit point is identified, for example using techniques to be described below. Such a common quit point may be referred to as a confirmation point. This provides an example of detecting, amongst a plurality of instances of replay of the video material, respective positions within the video material at which the respective user stopped replay, and an example of assigning the detected position as a confirmation point.

Referring to Figure 8, at the step 710, a distribution 800 of quit points with reference to location within the health video 510 and in particular within the portion 530 is generated. The step 720 can then involve one or both of the following. A most common quit .810 can be identified as the video position at which the distribution of user quit points is the highest (that is to say, of the users and instances sampled, the highest number of users quit at the point 810). A first threshold quit point 820 can be identified as the first occasion within playback of the portion 530 that the distribution 800 of quit points exceeded a threshold level 830. Other common quit points can be identified, such as (in a multiple peaked distribution) the second, third or other highest distribution separated from another quit point by a threshold period of time such as 2 seconds, and so on. In this way one or multiple could points can be identified by the step 720.

This provides an example of detecting amongst the plurality of instances of replay of the video material, a position within the video material at which the respective user stopped replay which meets a first predetermined criterion. For example, the first predetermined criterion may be that the detected position is a most common position amongst the plurality of instances of the video material at which the user stopped replay, and/or the first predetermined criterion may be that the detected position is a first position amongst the plurality of instances of the video material at which at least a threshold proportion of users stopped replay.

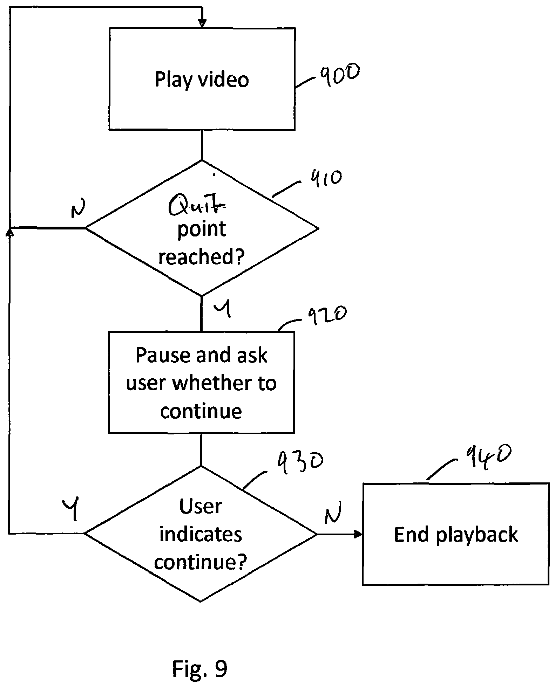

Figure 9 is a schematic flowchart illustrating a replay technique for the health video making use of the one or more quit points detected by the step 720.

At a step 900 the entertainment system 10 starts to play a given help video.

At a step 910, a detection is made as to whether a quit point (of the one or more detected by the step 720 for that help video) has been reached. If the answer is no, then control returns to the step 900. If, however, the answer is yes then control passes to a step 920.

At the step 920, the entertainment system pauses the help video and asks the user, for example by a screen or visual notification, to indicate whether or not the user wishes to continue replay. The user may respond by pressing an appropriately identified command button on the controller 130 for example.

At the step 930, if the user replies to indicate that the user wishes to continue replay then control returns to the step 900 and which replays continued until the video ends or the next quit point is reached. Otherwise, if the user indicates not continue then control passes to a step 940 at which the help video playback is ended.

### Variation of quit points

In the above examples, the quit point which has been actually detected can be modified before being used in the flowchart of Figure 9. The reason why this might be useful is that in the case of a quit point detected from user behaviour, the users may well have quit because they had already seen (though perhaps only just) a spoiler, so the detected quit point might be too late to avoid the spoiler by a typical user reaction time.
To address this, the quit points as detected can be modified so as to bring them earlier in the video replay by a margin such as 0.2 seconds, before the quit points are applied to the flowchart of Figure 9. This provides an example of assigning a position which is a predetermined period before the detected position as a confirmation point.

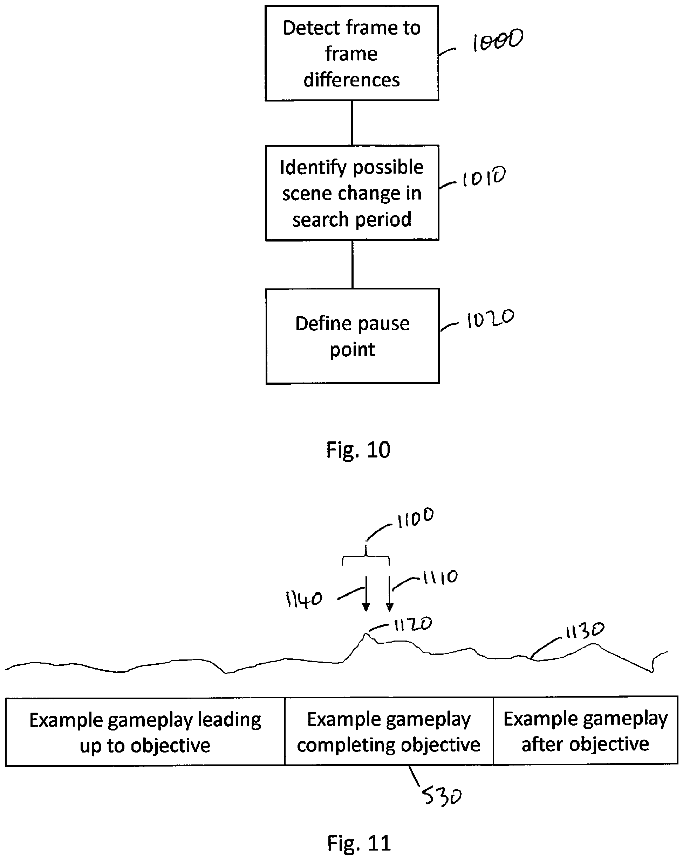

Another technique for generating and/or varying could points will now be described with reference to Figures 10 and 11.

In this arrangement, the video material itself is analysed, for example to detect positions indicative of a scene change, which may be represented by a local maximum in absolute image differences between successive frames.

In some examples, such a potential scene change or other significant image occurrence could be used as a quit point itself. But in other examples such as that to be described with reference to Figures 10 and 11, a possible scene change just before a detected quit point (that is to say, a quit point detected according to the flowchart of Figure 7) is used to replace that detected quit point. In other words, the flowchart of Figure 7 is used to detect when people quit out of the help video, but rather than simply applying and offsets to bring the quit point earlier as described above, a detection is attempted to see whether some scene change or other significant image occurrence happens just before the detected quit point, with the quit point itself being moved back to that scene change or other significant image occurrence.

Note that the techniques to be described does not need to definitively attempt to detect a scene change; instead, the detection is of a local maximum in image-to-image absolute difference, which may (or may not) represent a scene change.

Referring to Figure 10, at a step 1000, absolute frame to frame differences, representing the sum of absolute values of pixel differences between corresponding pixel positions in at least a portion of two successive frames, is detected for at least a search period of the help video. Here, the search period represents a period of time 1100 (Figure 11) preceding a detected quit point 1110. Of course, the step 1000 could be implemented in respect of the whole help video, or in respect of the whole of the portion 530, instead of just the search period. The search period may have a duration of, for example, 1 second.

At a step 1010 a possible scene change is detected within the search period. As discussed above, it does not matter whether this is a scene change or not, but in fact a local maximum absolute frame difference is detected. Optionally a constraint can be applied so that such a local maximum can be no closer than a threshold separation such as 0.1 seconds from the quit point 1110. in Figure 11, a local maximum 1120 in the detected absolute frame difference values 1130 has been detected within the search period 1100 and a time point 1140 associated with the local maximum 1120. The quit point 1110 is modified at a step 1020 so as to be replaced by the time point 1140 detected as a local maximum absolute frame difference within the search period leading up to the quit point 1110.

In other examples, the search does not need to be based upon a detected quit point obtained by the flowchart of Figure 7, but instead one or more local maxima, for example constrained to be at least 0.1 seconds apart, can be detected within the video portion 530.

This arrangement provides an example of detecting inter-image differences in the video material; in which detecting one or more replay confirmation points comprises assigning as a confirmation point a position before the detected position for which the detected inter-image differences meet a second predetermined criterion as a confirmation point. For example, the second predetermined criterion may be that the detected inter-image difference exhibits a local maximum within a search period before the detected position.

### Method example

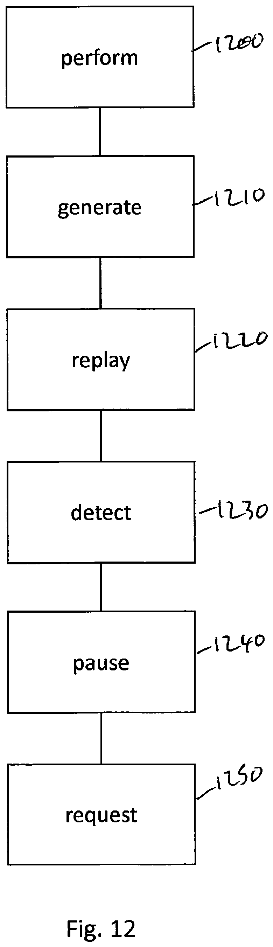

Figure 12 is a schematic flowchart illustrating a method comprising:
performing (at a step 1200), using processing circuitry, a data processing task in response to operation of one or more user controls;
generating (at a step 1210) video material for display to provide guidance to a user in the operation of the user controls to control performance of the data processing task;
replaying (at a step 1220) the video material in response to operation of the one or more user controls;
detecting (at a step 1230) one or more replay confirmation points with respect to the video material; and
pausing (at a step 1240) replay of the video material at a given confirmation point and requesting (at a step 1250) user confirmation to continue replay of the video material beyond the given confirmation point.

It is noted that the circuitry of Figure 1a provides one or more user controls 130, 130A-L, 130A-R; and processing circuitry 20, 30 to perform a data processing task in response to operation of the one or more user controls; the processing circuitry being configured to perform the above method under software control.

### Other examples

While this description has referred primarily to computer game software, with the processing circuitry comprising computer game processing circuitry and the data processing task comprises a computer game operation, the computer game processing circuitry allowing progression to a next data processing task to be performed by the computer game processing circuitry in response to operation of the one or more user controls in response to successful completion of a current data processing task, the present disclosure is more widely applicable and can be relevant to other types of software involving challenges, tasks or objectives presented to a user, such as software to operate industrial robots or unmanned vehicles, software to control test procedures such as chemical assays, computer aided design software and the like. The technical features of the entertainment system 10 of Figure 1b could be provided as a general purpose data processing apparatus or circuitry configured to execute such software, and the skilled person will appreciate that the user controls such as devices 130, 130A-L and 130A-R could be embodied to control such apparatus either in that form or in other forms of user operable controls.

### General matters

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Similarly, a data signal comprising coded data generated according to the methods discussed above (whether or not embodied on a non-transitory machine-readable medium) is also considered to represent an embodiment of the present disclosure.

It will be apparent that numerous modifications and variations of the present disclosure are possible in light of the above teachings. It is therefore to be understood that within the scope of the appended clauses, the technology may be practised otherwise than as specifically described herein.

## Claims

1. A method comprising:
performing, using processing circuitry, a data processing task in response to operation of one or more user controls;
generating video material for display to provide guidance to a user in the operation of the user controls to control performance of the data processing task;
replaying the video material in response to operation of the one or more user controls;
detecting one or more replay confirmation points with respect to the video material; and
pausing replay of the video material at a given confirmation point and requesting user confirmation to continue replay of the video material beyond the given confirmation point.

2. The method of claim 1, in which the detecting step comprises detecting, amongst a plurality of instances of replay of the video material, respective positions within the video material at which the respective user stopped replay.

3. The method of claim 2, in which the detecting step comprises detecting amongst the plurality of instances of replay of the video material, a position within the video material at which the respective user stopped replay which meets a first predetermined criterion.

4. The method of claim 3, in which the detecting step comprises assigning the detected position as a confirmation point.

5. The method of claim 3, in which the detecting step comprises assigning a position which is a predetermined period before the detected position as a confirmation point.

6. The method of claim 3, comprising the step of detecting inter-image differences in the video material;
in which the step of detecting one or more replay confirmation points comprises assigning as a confirmation point a position before the detected position for which the detected inter-image differences meet a second predetermined criterion as a confirmation point.

7. The method of claim 6, in which the second predetermined criterion is that the detected inter-image difference exhibits a local maximum within a search period before the detected position.

8. The method of any one of claims 3 to 7, in which the first predetermined criterion is that the detected position is a most common position amongst the plurality of instances of the video material at which the user stopped replay.

9. The method of any one of claims 3 to 7, in which the first predetermined criterion is that the detected position is a first position amongst the plurality of instances of the video material at which at least a threshold proportion of users stopped replay.

10. The method of any one of the preceding claims, in which the processing circuitry comprises computer game processing circuitry and the data processing task comprises a computer game operation.

11. The method of claim 10, comprising the step of the computer game processing circuitry allowing progression to a next data processing task to be performed by the computer game processing circuitry in response to operation of the one or more user controls in response to successful completion of a current data processing task.

12. Computer software which, when executed by one or more computers, causes the one or more computers to perform the method of any one of the preceding claims.

13. A non-tangible machine-readable storage medium which stores the computer software of claim 12.

14. Apparatus comprising:
one or more user controls; and
processing circuitry to perform a data processing task in response to operation of one or more user controls;
the processing circuitry being configured to:
generate video material for display to provide guidance to a user in the operation of the user controls to control performance of the data processing task;
replay the video material in response to operation of the one or more user controls;
detect one or more replay confirmation points with respect to the video material; and
pause replay of the video material at a given confirmation point and request user confirmation to continue replay of the video material beyond the given confirmation point.

15. The apparatus of claim 14, in which the processing circuitry comprises computer game processing circuitry and the data processing task comprises a computer game operation.
